# EUROPÄISCHE PATENTANMELDUNG

(11) **EP 1 426 135 A1**
(43) Veröffentlichungstag der Anmeldung: **09.06.2004**
(21) Anmeldenummer: 03027160.5
(22) Anmeldetag: 26.11.2003
(51) Int. Cl.: B23K 15/10, B23K 35/38

(54) **Schutzgas für das Elektronenstrahlschweissen an Atmosphäre von metallischen Werkstoffen**

(30) Priorität: 05.12.2002 DE 10256779
(71) Anmelder: MESSER GRIESHEIM GmbH, 65933 Frankfurt am Main (DE)
(72) Erfinder: Hildebrandt, Bernd, Dr., 47918 Tönisvorst (DE)

(57) **Zusammenfassung**

Das erfindungsgemäße Schutzgas für das Elektronenstrahl-schweißen an Atmosphäre von metallischen Werkstoffen, insbesondere von Leichtmetallen zur Automobilfertigung, bestehend aus einem Kaltgas in Form von kostengünstigen Stickstoff oder Helium, ermöglicht eine kostengünstige und zudem qualitätsgerechte Werkstoffbearbeitung.

## Beschreibung

Die Erfindung betrifft ein Schutzgas für das Elektronenstrahlschweißen an Atmosphäre von metallischen Werkstoffen, insbesondere von Leichtmetallen.

Das bisher als Schutzgas beim Elektronenstrahlschweißen an Atmosphäre (NonVacuumElectronBeamWelding = NV-EBW) von metallischen Werkstoffen, insbesondere von Leichtmetallen wie Aluminium zur Automobilfertigung, mit einer der Umgebungstemperatur entsprechenden Temperatur eingesetzte Helium steht nur in begrenzter Menge zur Verfügung und ist daher teuer in der Anwendung.

Der Erfindung liegt daher die Aufgabe zugrunde, ein Schutzgas zum Elektronenstrahlschweißen an Atmosphäre von metallischen Werkstoffen, insbesondere von Leichtmetallen, zur Verfügung zu stellen, das eine kostengünstige und zudem qualitätsgerechte Werkstoffbearbeitung ermöglicht.

Die Aufgabe wird erfindungsgemäß durch ein aus Kaltgas bestehendes Schutzgas gelöst.

Erfindungsgemäß wird als Kaltgas ein reaktionsträges Gas, vorteilhaft kostengünstiger Stickstoff (Verdampfungstemperatur minus 196 Grad Celsius) oder ein Inertgas, vorzugsweise Helium (Siedetemperatur minus 269 Grad Celsius) eingesetzt.

Das erfindungsgemäße Schutzgas aus kaltem Gas für das Elektronenstrahlschweißen an Atmosphäre von metallischen Werkstoffen, insbesondere von Leichtmetallen wie Aluminium zur Automobilfertigung, ermöglicht eine kostengünstige und qualitätsgerechte Werkstoffbearbeitung.

Ausserdem ermöglicht der erfindungsgemäße Einsatz von Kaltgas-Schutzgas beim Elektronenstrahlschweißen an Atmosphäre von metallischen Werkstoffen auf Grund der abgeschwächten Teilchenbewegung eine bessere Strahlfokussierbarkeit.

## Patentansprüche

1. Schutzgas für das Elektronenstrahlschweißen an Atmosphäre von metallischen Werkstoffen, insbesondere von Leichtmetallen, bestehend aus einem Kaltgas.

2. Schutzgas nach Anspruch 1, **dadurch gekennzeichnet, daß** das Kaltgas aus Inertgas besteht.

3. Schutzgas nach Anspruch 2, **dadurch gekennzeichnet, daß** das Inertgas vorzugsweise aus Helium besteht.

4. Schutzgas nach Anspruch 1, **dadurch gekennzeichnet, daß** das Kaltgas aus einem reaktionsträgen Gas besteht.

5. Schutzgas nach Anspruch 4, **dadurch gekennzeichnet, daß** das Kaltgas vorzugsweise aus Stickstoff besteht.

6. Verwendung des Schutzgases für das Elektronenstrahlschweißen an Atmosphäre von Leichtmetallen zur Automobilfertigung.
